Europäisches Patentamt

European Patent Office

Office européen des brevets

(11) Veröffentlichungsnummer: **0 459 180 A1**

# (12) EUROPÄISCHE PATENTANMELDUNG

(21) Anmeldenummer: 91107341.9

(51) Int. Cl.⁵: **B60R 16/02**

(22) Anmeldetag: 06.05.91

(30) Priorität: 31.05.90 DE 4017589

(43) Veröffentlichungstag der Anmeldung:
04.12.91 Patentblatt 91/49

(84) Benannte Vertragsstaaten:
DE ES FR GB GR IT NL

(71) Anmelder: **PV ELECTRIC GMBH**
**Frankfurter Ring 152**
**W-8000 München 46(DE)**

(72) Erfinder: **Aulich, Hubert, Dr.**
**Schwarzstrasse 3**
**W-8000 München 80(DE)**
Erfinder: **Christ, Thomas, Dipl.-Ing.**
**Memeler Strasse 25**
**W-4100 Duisburg 18(DE)**

(74) Vertreter: **Fuchs, Franz-Josef, Dr.-Ing.**
**Postfach 22 13 17**
**W-8000 München 22(DE)**

(54) **Fahrzeugkabine mit Solarzellen für Kraftfahrzeuge.**

(57) Es wird eine Fahrzeugkabine für Kraftfahrzeuge vorgeschlagen mit einem im wesentlichen horizontal eingebauten Glasschiebedach (1) und einem Abblendschieber (5), welcher die durch das Glasschiebedach (1) einfallende Sonnenstrahlung zumindest teilweise abblendet und auf seiner dem Glasschiebedach zugewandten Oberfläche Solarzellen (6) aufweist. Als Abblendschieber (5) kann ein in Kompaktbauweise hergestelltes, auf einem Glassubstrat abgeschiedenes, Solarmodul aus amorphem Silizium dienen, welches auch für ältere Kraftfahrzeuge mit Glasschiebedach nachrüstbar ist.

# FIG1

EP 0 459 180 A1

Insbesondere während der warmen Jahreszeit kann sich der Innenraum eines Kraftfahrzeugs, welches über längere Zeit im Stillstand einer intensiven Sonnenbestrahlung ausgesetzt ist, stark aufwärmen. Vor Antritt einer Fahrt kann es daher unumgänglich sein, die Temperatur im Innern der Fahrzeugkabine auf ein verträgliches Maß zu reduzieren.

Um ein zu starkes Aufheizen der Fahrzeugkabine während des Fahrzeugstillstands zu vermeiden, wird in der US-3 943 726 vorgeschlagen, ein Kraftfahrzeug mit Solarzellen auszurüsten und mit diesen eine Klimaanlage oder einen im Inneren der Fahrzeugkabine angeordneten Ventilator zu betreiben. Dazu sollten Solarzellen in die Oberfläche der gesamten Karosserie und in die Umgrenzung der Heckscheibe eingebettet werden. Damit kann an heißen Sommertagen die Innentemperatur der Fahrzeugkabine abgesenkt und gleichzeitig ein Ladungsverlust der Batterie kompensiert werden.

In der US-PS 4 663 495 wird vorgeschlagen, ein photovoltaisches Modul in das Sonnendach eines Kraftfahrzeugs einzubetten. Bei einem aus amorphem Halbleitermaterial hergestellten Modul ergibt sich dabei der zusätzliche Vorteil, daß das Material semitransparent ist.

Bei den bisher vorgeschlagenen Lösungen ergibt sich der Nachteil, daß es sich bei den Außenflächen von Kraftfahrzeugen immer um ein- oder zweiachsig gekrümmte Flächen handelt. Auf derartigen Flächen ist das Aufbringen von kristallinen Solarzellen nur mit stark erhöhtem Aufwand realisierbar. Auch das Abscheiden von amorphem Silizium ist auf gekrümmten Oberflächen erschwert.

Weiterhin wird bei kristallinen Zellen das optische Erscheinungsbild der Fahrzeugkarosserie ungünstig beeinflußt.

Weitere Vorschläge befassen sich damit, einen Teil der schrägstehenden Fenster, einen Teil der Hutablage oder den unter der Windschutzscheibe liegenden waagrechten Ausläufer des Armaturenbrettes mit Solarzellen zu bestücken. Abgesehen von den zum Teil großen konstruktiven Veränderungen am Fahrzeug benötigen diese Zellen eine bestimmte Ausrichtung des Fahrzeugs zur Sonne, da sie bei anderen Ausrichtungen im Schatten liegen und dabei ihre Wirkung teilweise oder ganz verlieren.

Aufgabe der vorliegenden Erfindung ist es daher, eine Solarenergieversorgung für Kraftfahrzeuge insbesondere zur Kühlung bereitzustellen, welche einfach herzustellen ist und in ein beliebiges Fahrzeug integriert werden kann.

Diese Aufgabe wird erfindungsgemäß gelöst durch eine Fahrzeugkabine für ein Kraftfahrzeug mit einem im wesentlichen horizontal eingebauten Glasschiebedach und einen Abblendschieber, welcher die durch das Glasschiebedach in die Fahrzeugkabine einfallende Sonnenstrahlung zumindest teilweise abblendet und auf seiner dem Glasschiebedach zugewandten Oberfläche Solarzellen aufweist.

Weitere Ausgestaltungen der Erfindung sind den Unteransprüchen zu entnehmen.

Mit der vorliegenden Erfindung kann nun erstmals eine Fahrzeugkabine mit einer nahezu beliebig geformten Oberfläche mit einer elektrischen Energieversorgung durch Solarzellen versehen werden, ohne daß das äußere Erscheinungsbild dieses Fahrzeuges beeinträchtigt wird. Der Abblendschieber des Glasschiebedaches kann dabei eine flache nicht gekrümmte Oberfläche aufweisen, und so mit flachen und nicht gekrümmten Solarzellen bestückt werden. Gleichzeitig können die Solarzellen durch ihre erfindungsgemäße Anordnung auf dem Abblendschieber je nach Stellung des Abblendschiebers und nach Ausführung der Solarzellen das gesamte durch das Glasschiebedach einfallende Sonnenlicht abblenden, einen Teil des Spektrums ausfiltrieren oder die Strahlung ganz oder in bestimmten Bereichen durchlassen.

Als weiterer Vorteil ergibt sich, daß der Abblendschieber ein in sich abgeschlossenes Bauteil darstellt. Eine nachträgliche Ausrüstung einer Fahrzeugkabine mit Solarzellen erfordert dann erfindungsgemäß nur noch das Austauschen und die elektrische Kontaktierung des Schiebers. Bei einem Neuwagen mit Glasschiebedach kann bereits serienmäßig eine elektrische Kontaktierung vorgesehen sein, so daß die Nachrüstung mit einem erfindungsgemäß mit Solarzellen bestückten Abblendschieber erleichtert wird. Der Abblendschieber kann dann genormt und für verschiedene Fahrzeugtypen passend sein.

Bekannte Glasschiebedächer bestehen aus einem Glasdeckel, der von einem Metallrahmen eingefaßt wird und an der Unterseite mit diesem verklebt ist. Zum Schutz der Verklebung vor UV-Strahlung ist das Glas an diesen Stellen an der Unterseite schwarz eingefärbt. Da dieser Bereich des Glasschiebedachs ein Solarmodul auf dem Abblendschieber nicht nutzbar ist, sind die Solarzellen erfindungsgemäß nur unterhalb des transparenten Bereiches des Glasschiebedachs angeordnet.

Um einen hohen Anteil der Sonnenstrahlung durch die Solarzellen auf dem Abblendschieber zu nutzen, wird für das Glasschiebedach ein Glas mit hoher Transparenz für sichtbares Licht verwendet. Die erforderliche bzw. gewünschte Leistung der Solarzelle ist mitausschlaggebend für die Auswahl des für die Solarzellen zu verwendenden Materials. Für hohe Leistungen bzw. einen hohen Wirkungsgrad bei der Umwandlung des Sonnenlichts in elektrische Energie werden mono- oder polykristalline Solarzellen ausgewählt, während für eine preiswerte und technisch einfacher zu realisierende Ausführung amorphe Solarzellen bevorzugt sind. Amorphe Solarzellen haben zudem den Vorteil, daß sie großflächig auf Substraten abgeschieden und dabei integriert serienverschaltet werden können.

Ein derartig erzeugtes photovoltaisches Modul aus amorphen Solarzellen kann in einer Ausführungsform der Erfindung ohne aufwendige weitere Maßnahmen direkt als Abblendschieber verwendet werden. Das amorphe Material hat zudem den Vorteil, daß es noch eine gewisse Transparenz für sichtbares Licht aufweist und in der Art eines Sonnenschutzglases lediglich den störenden Anteil des Sonnenlichts ausfiltert. Daraus ergibt sich eine zusätzliche Funktion des Abblendschiebers zum Schutz eines Fahrzeuginsassen gegen bestimmte Anteile der Sonneneinstrahlung.

Bei Verwendung kristalliner Solarzellen müssen diese serienverschaltet werden, um die elektrische Energie in einer für die angeschlossenen Verbraucher nutzbaren Form zu erhalten. Die Solarzellen können entweder von der Fahrzeugbatterie unabhängige Verbraucher mit einer beliebigen Betriebsspannung, insbesondere Ventilatoren oder sonstige Kühlvorrichtungen antreiben, oder mit bereits im Fahrzeug vorhandenen Kühlungs- und Lüftungsvorrichtungen elektrisch verbunden werden. Dabei kann vorgesehen sein, daß die Kühlungsvorrichtung erst ab einer bestimmten Starttemperatur zu arbeiten beginnt und daß durch den Betrieb der Kühlungsvorrichtung die Fahrzeugbatterie nicht entladen wird.

Im folgenden wird die Erfindung anhand eines Ausführungsbeispiels und der dazugehörigen drei Figuren naher beschrieben. Dabei zeigen

die Figur 1
einen schematischen Querschnitt durch das Dach einer Fahrzeugkabine mit Glasschiebedach und einem Abblendschieber,
die Figur 2
ein Glasschiebedach mit Abblendschieber in Draufsicht und
die Figur 3
eine erfindungsgemäße Fahrzeugkabine in schematischer perspektivischer Ansicht.

Gleiche Teile sind in den Figuren mit gleichen Bezugszeichen bezeichnet.

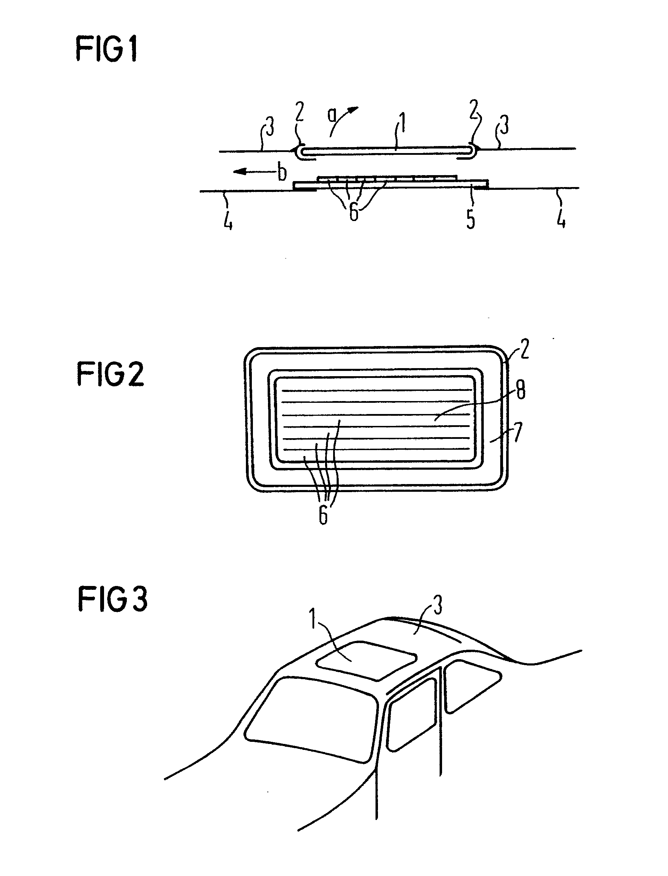

Figur 1: Der Glasdeckel 1 eines Schiebedachs hat üblicherweise eine Fläche von 860 × 460 mm². Nach heutiger Technik wird der Glasdeckel 1 rundum von einem Metallrahmen 2 eingefaßt, der an der Unterseite mit dem Glasdeckel 1 verklebt ist. Diese Verklebung bedeckt einen 7 bis 10 cm breiten umlaufenden Streifen. Zum Schutz der Klebefläche vor UV-Strahlung ist das Glas an diesen Stellen an der Unterseite schwarz eingefärbt. Diese Fläche geht als für Solarzellen nutzbare Fläche auf dem Abblendschieber verloren. Bei einem 10 cm breiten Rand steht also eine Solarzellenfläche von 260 × 660 mm² zur Verfügung. Bei Verwendung von Standardsolarmodulen läßt sich darauf eine Modulleistung von 10 Wp (bei Dünnschichtsilizium unter 1000 W/m² Beleuchtung mit 6 Prozent Wirkungsgrad) installieren. Solarmodule aus monokristallinem Silizium mit einem ungefähr zweimal so großen Wirkungsgrad erreichen eine entsprechend höhere Leistung bei gleicher Fläche.

Das Glasschiebedach (1, 2) ist in das Dach 3 einer Fahrzeugkabine eingebettet. Eine an sich bekannte Mechanik ist am Rahmen 2 des Glasschiebedaches befestigt und erlaubt ein Hochklappen (siehe Richtungspfeil a bzw. ein Zurückschieben des Glasschiebedachs in den Hohlraum zwischen dem Dach 3 der Fahrzeugkabine und dem darunter angebrachten Himmel 4 (siehe Richtungspfeil b). Unterhalb des Glasschiebedachs ist der Abblendschieber 5 angeordnet, welcher in der ausgefahrenen Stellung bündig mit dem Himmel 4 abschließt, sich aber ebenso wie das Glasschiebedach in Richtung b zwischen Himmel 4 und Fahrzeugkabinendach 3 zurückschieben läßt. Unterhalb des Bereiches des Glasschiebedachs 1, welcher nicht vom Rahmen 2 abgedeckt wird, sind auf dem Abblendschieber 5 Solarzellen 6 angeordnet. Vorzugsweise wird dafür ein integriert auf einem Glassubstrat erzeugtes und verschaltetes Solarmodul aus amorphem Silizium verwendet. Ist das Solarmodul aus amorphem Silizium beidseitig mit transparenten Elektroden versehen, so erhält man einen aufgrund der Lichtabsorption des amorphen Siliziums semitransparenten Abblendschieber, welcher einen rötlichen Farbton aufweist und einer Sonnenschutzverglasung ähnelt. Die zum Modul verschalteten Einzelsolarzellen 6 können zum Beispiel streifenförmig angeordnet sein und so eine dekorative Wirkung des Abblendschiebers erzeugen. In einer weiteren Ausführungsform der Erfindung kann der Abblendschieber 5 zum Innenraum der Fahrzeugkabine hin mit demselben Material überzogen sein, welches auch den Himmel 4 bildet. Bei ausgefahrenem Abblendschieber 5 kann so kein Licht durch das Glasschiebefenster 1 in das Fahrzeuginnere gelangen.

Die in der Figur 1 nicht dargestellten elektrischen Anschlüsse des Solarmoduls können zum Beispiel zwischen Himmel 4 und Fahrzeugdach 3 verlegt werden und zu einer an beliebiger Stelle am Fahrzeuginneren angeordneten Vorrichtung zur Temperaturabsenkung (zum Beispiel Ventilator oder Lüftung) geleitet werden. Weitere elektrische Verbindungen können zur Fahrzeugbatterie hergestellt werden, wobei der Stromfluß über eine Schaltung steuer- oder regelbar sein kann, so daß zum Beispiel die Kühlung temperaturgesteuert automatisch einsetzt oder manuell zuschaltbar ist.

Die Figur 2 zeigt das Glasschiebedach 1 in der Draufsicht. Der unterhalb des Glases zum Schutz der Klebestelle aufgebrachte Anstrich ist mit Bezugzeichen 7 versehen. Unterhalb der noch freigebliebenen und daher transparenten Fläche des Glasschiebedaches 1 ist auf dem in ausgezogener Stellung dargestellten Abblendschieber 5 aufgebrachtes Solarmodul 8 zu erkennen. Dieses besteht aus serienverschalteten Einzelsolarzellen 6 aus amorphem Silizium.

Figur 3 zeigt schematisch in perspektivischer Darstellung das Dach 3 einer Fahrzeugkabine mit darin eingebautem Glasschiebedach 1.

**Patentansprüche**

1. Fahrzeugkabine für ein Kraftfahrzeug mit einem im wesentlichen horizontal eingebauten Glasschiebedach und einem Abblendschieber, welcher die durch das Glasschiebedach in die Fahrzeugkabine einfallende Sonnenstrahlung zumindest teilweise abblendet und auf seiner dem Glasschiebedach zugewandten Oberfläche Solarzellen aufweist.

2. Fahrzeugkabine nach Anspruch 1, **dadurch gekennzeichnet**, daß die Solarzellen auf dem Abblendschieber unterhalb des transparenten Bereiches des Glasschiebedaches angeordnet sind.

3. Fahrzeugkabine nach Anspruch 1 oder 2, **dadurch gekennzeichnet**, daß die Solarzellen zu einem Modul verschaltet sind.

4. Fahrzeugkabine nach einem der Ansprüche 1 bis 3, **dadurch gekennzeichnet**, daß die Solarzellen Dünnschichtsolarzellen sind.

5. Fahrzeugkabine nach mindestens einem der Ansprüche 1 bis 4, **dadurch gekennzeichnet,** daß die Solarzellen aus einem semitransparenten amorphem Material bestehen.

6. Fahrzeugkabine nach Anspruch 5, **dadurch gekennzeichnet,** daß die Solarzellen ein photovoltaisches Modul aus amorphem Silizium sind.

7. Fahrzeugkabine nach einem der Ansprüche 1 bis 6, **dadurch gekennzeichnet,** daß die Solarzellen ein Modul bilden und dieses Modul mit seinem Substrat den Abblendschieber darstellt.

8. Fahrzeugkabine nach mindestens einem der Ansprüche 1 bis 7, **dadurch gekennzeichnet,** daß das Glasschiebedach ein Glas mit hoher Transparenz für sichtbares Licht aufweist.

## FIG 1

## FIG 2

## FIG 3

Europäisches
Patentamt

**EUROPÄISCHER RECHERCHENBERICHT**

Nummer der Anmeldung

| EINSCHLÄGIGE DOKUMENTE | | | EP 91107341.9 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.⁵)** |
| X | DE - A1 - 3 545 014 (AUDI) * Gesamt * | 1,2,3, 7,8 | B 60 R 16/02 |
| D,X | US - A - 4 663 495 (BERMAN) * Gesamt * | 3,4,5 | |
| D,A | US - A - 3 943 726 (MILLER) * Fig.; Zusammenfassung * | 1 | |
| A | DE - A1 - 3 007 003 (NISSAN) * Fig.; Ansprüche * | 1 | |
| | | | **RECHERCHIERTE SACHGEBIETE (Int. Cl.⁵)** |
| | | | B 60 R |

Der vorliegende Recherchenbericht wurde für alle Patentansprüche erstellt.

| Recherchenort | Abschlußdatum der Recherche | Prüfer |
|---|---|---|
| WIEN | 19-06-1991 | PANGRATZ |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82